**Europäisches Patentamt**

**European Patent Office**

**Office européen des brevets**

(19)

(11) Veröffentlichungsnummer: **0 245 574**
**A1**

(12) **EUROPÄISCHE PATENTANMELDUNG**

(21) Anmeldenummer: **86810276.5**

(22) Anmeldetag: **17.06.86**

(51) Int.Cl.³: **F 03 B 13/26**

(30) Priorität: **04.11.85 CH 4713/85**

(43) Veröffentlichungstag der Anmeldung:
**19.11.87 Patentblatt 87/47**

(84) Benannte Vertragsstaaten:
**BE CH DE FR GB IT LI LU NL SE**

(71) Anmelder: **Manzin, Sergio**
**Gehrenacker 7**
**CH-9030 Abtwil(CH)**

(72) Erfinder: **Manzin, Sergio**
**Gehrenacker 7**
**CH-9030 Abtwil(CH)**

(54) **Verfahren zur Erhöhung der elektrischen Produktion eines Gezeiten-Kraftwerkes.**

(57) Die oben erwähnte Methode hat mit Sicherheit eine positive Eigenschaft: Sie ermöglicht eine höhere Ausnützung der Energien, welche im natürlichen und wiederkehrenden Gezeitenphänomen verborgen sind. Zudem bietet diese Methode den Vorteil einer Verkürzung der Inaktivitätszeiten (perioden- oder Inaktivitätszeitspanne) der Gezeitenwasserkraftwerke, welche manchmal ein zweites, untersützendes Versorgungsbecken benötigen.

Diese Methode - wenn sie auch die stützende Funktion des Zweitbassins nicht abzuschaffen vermag - trägt zur Potenzierung ihrer Rolle bei indem sie die Lieferung von Zusatzmengen an Energie in Form von Pressluft ermöglicht, welche an Ort und Stelle oder in der Turbine des Hauptbassins ausnützbar ist. Sie erlaubt ausserdem eine Milderung der Schäden durch Versandungen, da ihre Anwendungsmöglichkeit ausserhalb der Dammauer besteht und die Schaffung der Energie demzufolge von aussen erfolgt. Bezüglich Ausnützung können ökonomisch signifikante und tragbare situationen entstehen, Situationen in sich problematisch unter dem Gesichtspunkt der Baumöglichkeit grossdimensionierter Dämme oder von Unregelmässigkeiten in der Erscheinung der natürlichen Phänomenen oder wie auch immer der Präsenz von nicht idealen Gezeitenintensitäten von Höhe oder Volumen.

II

EP 0 245 574 A1

0245574

### Patentanspruch

Verfahren zur Erhöhung des elektrischen Produktionspotentials eines Gezeitenkraftwerkes.

Das Potential kann gesteigert werden:

1. Durch Erhöhung des Wasserniveaus der Deiche, indem neue Wassermengen von aussen nach innen übertragen werden; somit steigt der Wasserpegel über den maximalen, mit dem höchsten Wert der Flut erreichbaren Zustand.

2. Mittels Anwendung -immer mit dem Ziel der Erzeugung neuer Mengen an Zusatzenergie- einer mit Pressluft angetriebenen Hilfsturbine.

Das Verfahren ist dadurch gekennzeichnet, dass Pressluft in Anwendung kommt. Die ausgenützte Pressluft entsteht aus der Auftaucharbeit oder Fallarbeit oder beides von verschiedenen Serien starrer Versenkkästen. Die Kästen können bei Notwendigkeit mit Wasser gefüllt werden und daher versenkt und am Deichboden befestigt werden. Sie gleiten in vertikaler Richtung entlang der zylinderartigen Leitpfosten mit Hilfe von einziehbaren, elektromagnetisch gesteuerter Muffen. Die Versenkkästen sind zudem durch einen Regelmechanismus versperrbar, der ebenfalls mit elektromagnetischen Impulsen funktioniert. Die oben erwähnten Kästen sind mit einem oder mehreren Kolben ausgerüstet. Die Kolben wirken wie in einer traditionellen, normalen Luftpumpe, auf robusten Zylindern, von einem Gerüst unterstützt und mit Ausgangsventilen (Auslassventilen) versehen.Sie enthalten normale oder vorgespresste Luft und besitzen ein einstellbares Ausgangsventil, welches die gepresste Luft in einem anliegenden Behälter entlädt. Der Behälter, ebenfalls mit Druckventilen versehen, steht durch eine Rohrleitung (Fall 1) in Verbindung mit jeweils einem oder mehreren, kugelförmigen Zentralbehältern, welche die röhrenförmigen Wasserüberträger mit Pressluft versorgen. Diese letzteren verfügen auf dem unteren Teil über wasserdichte Bullaugen, welche jeweils bei Wasserladung aufgemacht werden. Die Wasserüberträger stützen sich auf den externen Dammauern auf einer Höhe, die das Maximum an Nützlichkeit des höchsten Hebeniveaus und gleichzeitig das Minimum der Uebertragungsarbeit des Meerwassers auf die interne Seite des Deiches mittels Siphons, über welche sie verfügen, erlaubt. Die Wassermenge des Deiches kann natürlich, wenn man will, mit normalen Vacuumpumpen erhöht werden, ebenfalls durch Antrieb des Zentralpressluftbehälters. Im Fall 2 wird mit der Pressluft aus den Zentralbehältern eine Turbine oder andere Maschinen mit gleichatiger Versorgungsart angetrieben.

## Beschreibung

Verfahren zur Erhöhung der elektrischen Produktion eines Gezeiten-Kraftwerkes.

Es handelt sich um eine Methode, welche die Erhöhung des elektrischen Produktionspotentials des Systems zum Zwecke hat.

Diese Zunahme kann entweder durch eine künstlich hinzugefügte Wassermenge realisiert werden, welche den natürlichen, d.h. den durch das Gezeitenphänomen erreichbaren Wasserpegel übersteigt oder durch das Zurverfügungsetzen einer menge von Pressluft an die Zentrale, welche für die zusätzliche Erzeugung von elektrischer Energie durch Turbinen angewendet werden kann.

Die Pressluft ist das Erzeugnis der geleisteten Arbeit durch das Auftauchen von mehreren Reihen starrer Versenkkästen aus Leichtmetallegierung oder Leichtmetallen aus dem Grundbecken im Moment der maximalen Tiefe,welche gegen Korrosionsfaktoren durch Passivierung geschützt und mit Kolben ausgestattet sind und auf die obenliegenden, aus demselben Material bestehenden und mit Luft gefüllten Zylinders drücken (ein Druck nach unten ist nicht auszuschliessen).

Was die Zusammensetzung der Elementstrukturen anbelangt, ist auch Kunststoff in Betracht zu ziehen, während für den Luftdruck die Möglichkeit einer Beifügung von geeigneter Pressluftmengen durch Einspritzer in die Zylinder besteht, welche mit Auslassventilen ausgestattet sind und mit einem anliegenden, regulierbaren Eingangsventil ausgerüsteten Behälter in Verbindung stehen. Die Versenkkästen sind am Grundbecken durch ein seitliches oder obenliegendes Gerüst festgemacht.

Letztere Möglichkeit ist praktischer und trägt viele von diesen Kästen, welche in einer bestimmten Distanz voneinander liegen. Sie besteht aus einer langen, metallischen, auf interkalarierenden Pfosten sich stützenden Tragstangen. Die Pfosten sind am Beckenboden betoniert.

Zusammenfassend: Der Mechanismus ist der einer Kolbenpumpe, welche durch den Schub der ausgelösten Senkkästen angetrieben wird.

Das komplette Verfahren besteht aus folgenden Phasen:

1. Oeffnung der Dammschranken mit entsprechendem Wassereintritt bis zum maximal erreichbaren Pegelstand.

2. Auslösung der reihenweise am Beckenboden verankerten Versenkkästen, welche sukzessive eine Reihe nach der andern nach oben drängend die obenliegenden Luftkammern (Fig. 11-12-13) drücken. Die Pressluft wird von den einzelnen Luftbehältern sukzessive zu den kugelförmigen zentralen Luftbehältern zugeführt (Fig. 11 und 12). Aus diesen Figuren kann man auch die Anordnung der Druckkamern ersehen, welche aus einem Netz von sich gegeneinander im rechten Winkel schneidenden, obenliegenden Geländern besteht.

3. Durch Oeffnung der Bullaugen völlige Füllung der Versenkkästen, welche unter dem Wasserpegel versinken. In der Folge stehen zwei Handlungsmöglichkeiten zur Verfügung:

   I. Die Kästen bleiben nur unter dem Wasserpegel gerade blockiert. Sie werden später hinuntergelassen, um die Luftverdichtung zu betätigen, sobald das Becken leer ist.

   II. Die Kästen bleiben offen auf dem Boden.

4. Schliessung der Dammschranken.,

5. a) Füllung im Ausmass von 2/3 ca. des Volumens des externen, röhrenförmigen Wasserbehälters. Einspritzung von Pressluft in dieselbe Behälter, welche ausserhalb des Dammes liegen und über mit dem Innern des Dammbeckens kommunizierende Syphons verfügen. Die Verbindungen mit dem Innern des Dammbeckens werden durch Oeffnungen ermöglicht auf einer Höhe, welche die minimale Beförderungsarbeit beim Transfert des Meereswassers ausserhalb des Dammes in das Innere des Deiches gewährleistet Die Wirkung des Druckes innerhalb der Behälter verursacht die Entleerung derselben durch die Syphons, welche das Wasser nach dem Innern führen. Die Behälter werden sukzessive aufgefüllt, usw.

b) Die Gasturbine fängt an Energie zu erzeugen. Bei Ebbe wird sie mit einer Wasserturbine ersetzt, falls die Benützung einer einzigen, mit zwei Elementen alternierend arbeitenden Turbine unmöglich wäre.

Die Figuren 11,12,13 stellen eine Gesamtübersicht des Dammes dar. Ersichtlich sind die aufgetauchten Kästen und die Luftglocken, welche in den oberen Teilen an den Metallgittern befestigt sind und wie bei einem Schachbrett plaziert sind. Ausserhalb erscheinen die röhrenförmigen Behälter, welche die Uebertragung des Wassers durch die Syphons im Deich ermöglichen.

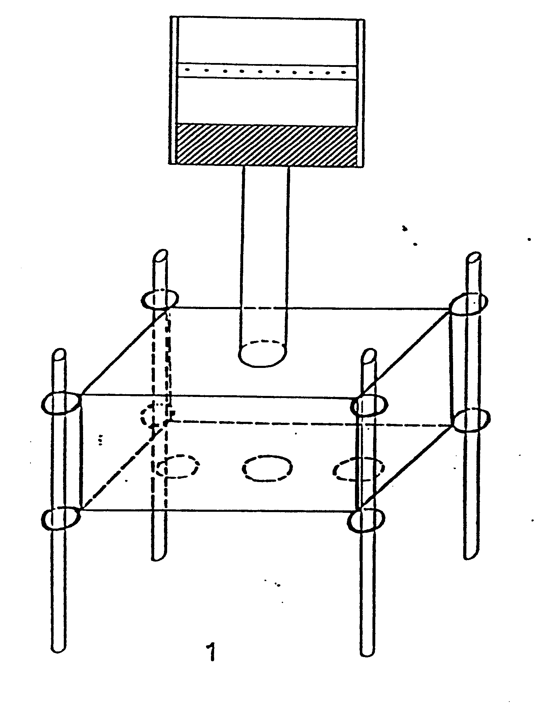

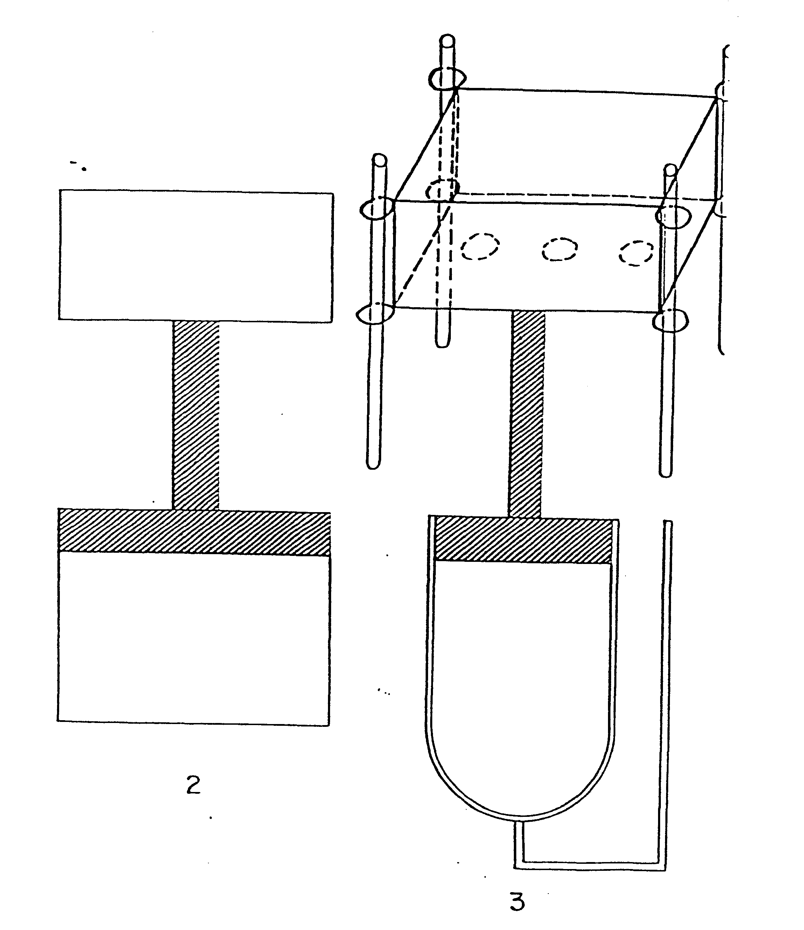

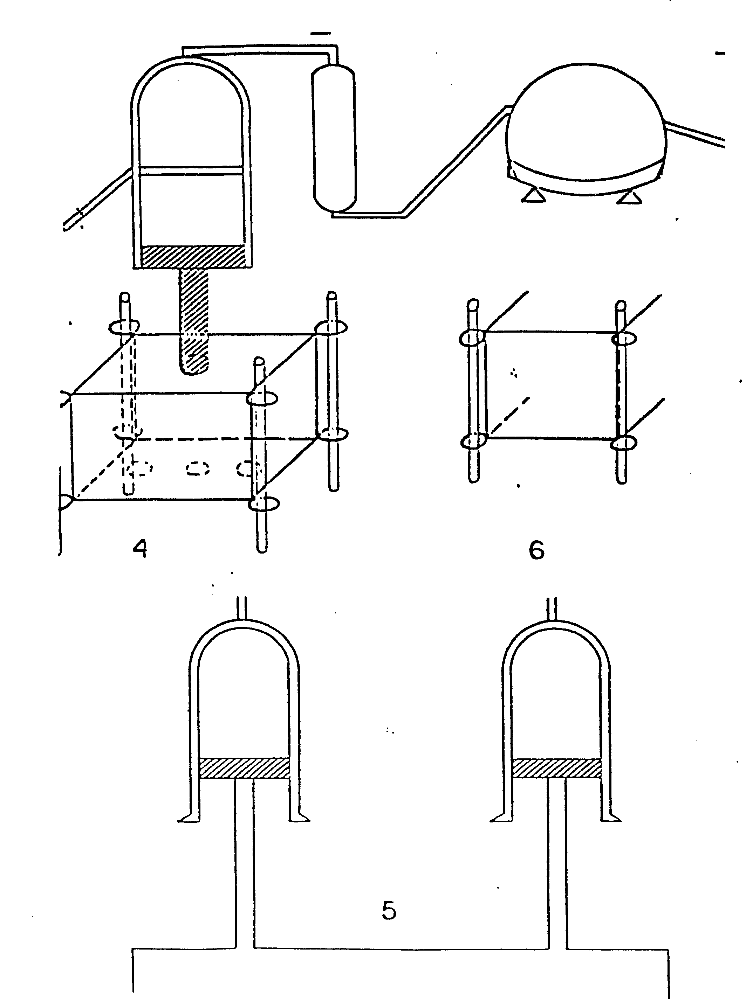

Die kugelförmigen Körper sind die Zentrallager für die Pressluft, welche entweder die Turbine oder die röhrenförmigen Wasserbehälter versorgen; letztere sind in Figur 13 nicht aufgezeichnet. Die Figur 1 stellt schematisch eine monozylindrischen kasten aus Durallumin passiviert dar. Bei Dimensionen,die Masse von 10mx10mx3m übersteigen, kann man zweizylindrische Kästen anwenden, d.h. mit zwei Druckkolben. Der am Boden befestigte Kasten gleitet in senkrechter Richtung, geführt durch 4 Muffen, welche ihn innerhalb des Laufgerüstes festhalten. Er verfügt über drei wasserdicht Bullaugen.Im Falle der Notwendigkeit einer Ausnützung der Fallarbeit hätte die Figur (Fig. 3) ein symetrisches Gegenstück mit Kolben, eingegrabene Zylinder und ebenfalls innenliegende Luftbehälter.

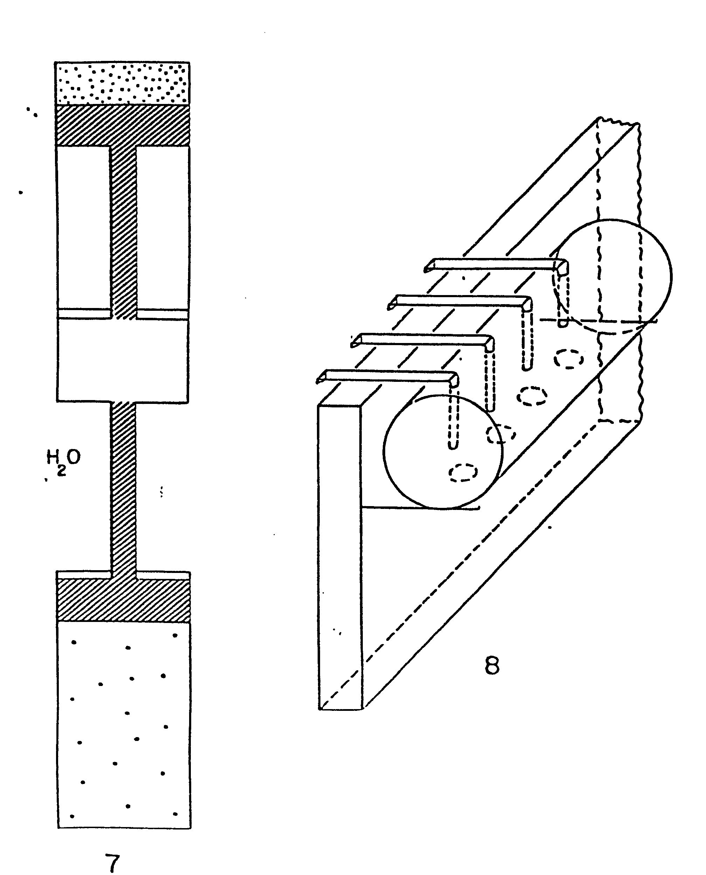

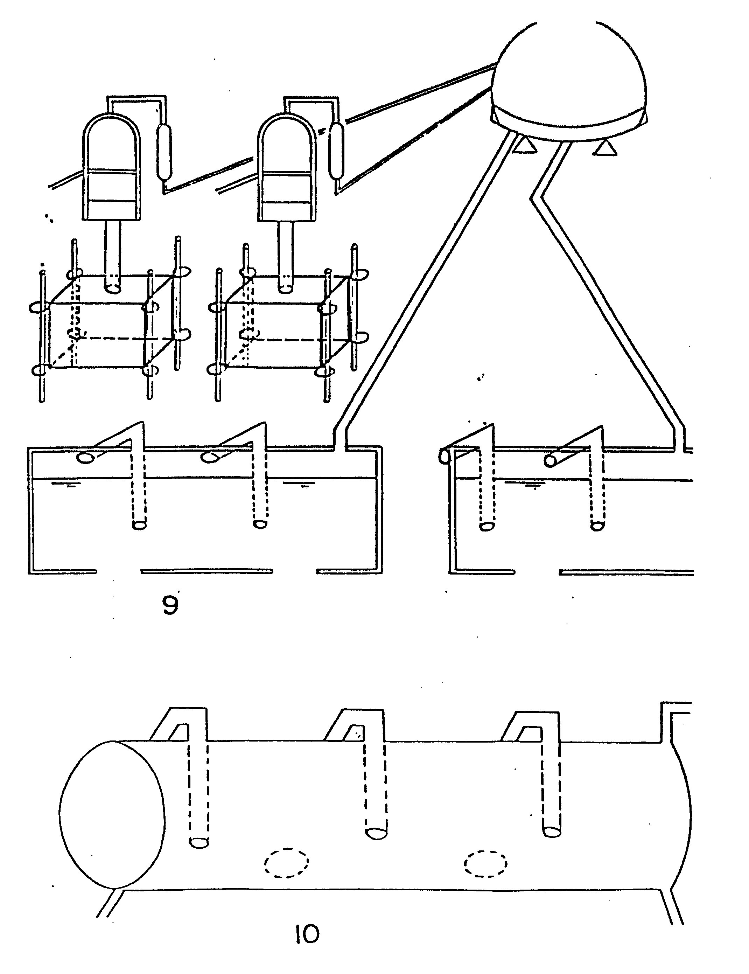

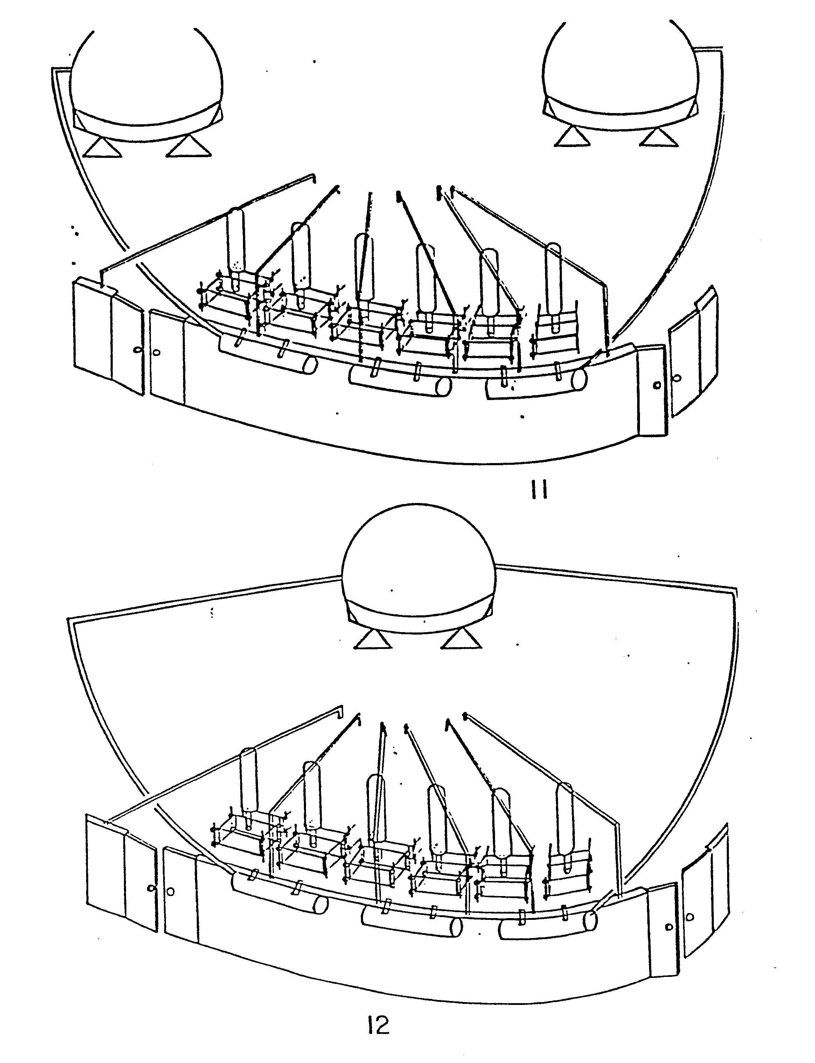

In der Figur 4 ist auch die oben liegende Luftkammer (Zylinder) am Boden befestigt. Die Pressluft gelangt - wie schon gesehen - durch das regulierbare Ventil in den anliegenden Luftbehälter und von dort bis zum kugelförmigen Zentrallager. Die Figur 5 stellt einen bizylindrischen Kasten dar. Die Figur 6 gibt ein Detail der elektromagnetisch gesteuerten, einziehbaren Muffen wieder, welche die Funktionen von Laufschienen und Bremsmanövern haben.

Die geleistete Arbeit, bei einer angenommenen Auftauchzeit von drei Sekunden und Abmessungen von 100mx 100m x 4 m, und wenn der Tidenhub 10 m erreicht hat und der Versenkkasten zur Hälfte seiner Höhe an die Oberfläche kommt, werden ca. 203 PS pro Stunde erreicht.

Wie bereits erwähnt, sind die Ausnutzungsmodalitäten dieser hydrodynamisch verdichteten Luft unterschiedlich. Um die Verdichtungs-

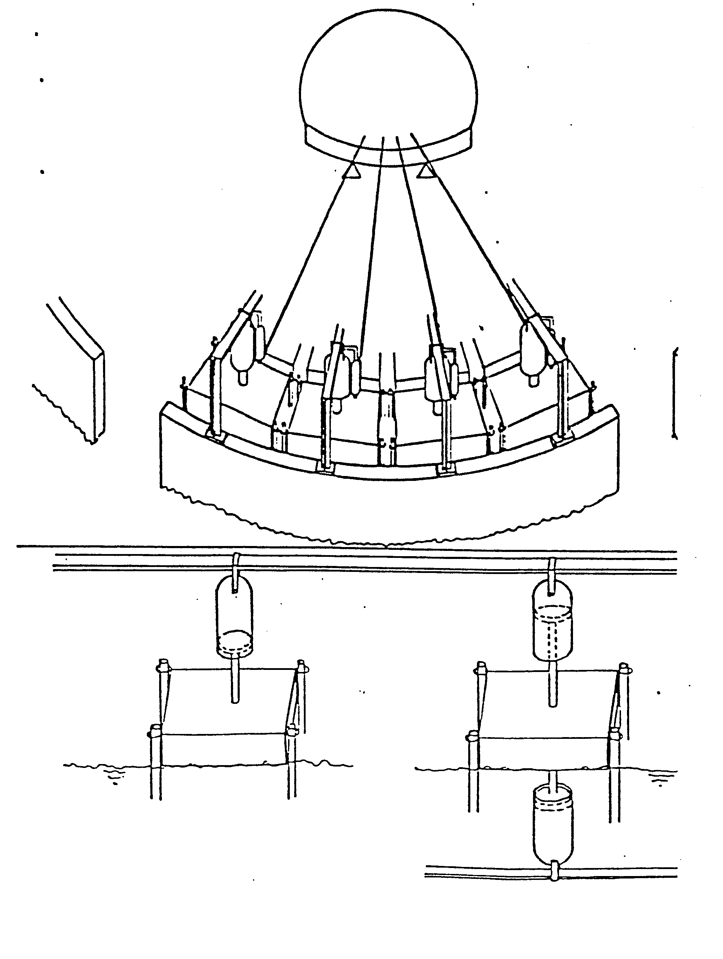

möglichkeit zu erhöhen (auch im Falle von Zylinderversorgung mit vorgespresster Luft) kann man die freigesetzte Energie während der totalen Versenkung von 2 oder 4 anliegenden Kästen durch ein Hebesystem des drückenden kastens mittels Flaschenzügen ausnützen. Die Figur stellt den Längsschnitt eines Systems "Kasten-Kolben-Luftpressekammer" dar. Die Figur 7 illustriert einen multiplen Kasten; die Figur 8 beschreibt einen Wasserüberträger mittels Syphons ausserhalb des Dammes angelegt und mit Metallauslegern gestützt. Auch er verfügt über Bullaugen für die Füllung, die mit Gummidichtungen ausgerüstet sind und deren Oeffnung und Schliessung mit Pressluft gesteuert wird. Dieser röhrenförmige Wasserüberträger ist auch in der Höhe regulirbar, indem er durch Rollen auf Rädern über die vertikalen Schienen einer Zahnradbahn verstellbar ist. Die Höhe des Wasserüberträgers und diejenige des Wassers selbst muss den Bedingungen der maximalen Nützlichkeit entsprechen und gleichzeitig denen der maximalen, technischen Vorteile und der ganzheitlichen Wirtschaftlichkeit. Der Syphonwasserüberträger wird nur aktiv nachdem das ausserhalb des Dammes liegende Wasser, das durch das Auftauchen des Kastens frei gewordenen Deichvolumen ersetzt haben wird, d.h. bis zum totalen Gleichgewicht des Systems und nachdem die Dammschranken geschlossen worden sind. Nur unter diesen Bedingungen werden die Wasserüberträger in die Lage versetzt, den Pegelstand des Wassers im Deich zu erhöhen, ohne negativen Gegenposten ausserhalb der marginalen Verluste an nutzbarem Volumen, welche die im Wasser liegende Trägerstrukturen verursachen. Die Figur 9 schildert den Längsschnitt von zwei Syphonwasserüberträger, gestützt auf der äusseren Seit der Dammauer und in Verbindung durch das Luftversorgungsrohr mit dem zentralen Pressluftbehälter.

Die Syphons durchqueren an geeigneter Höhe die Deichmauerstärke. Immer in Figur 4 sind zwei Versenkkästen, geleitet durch je ein Gerüst aus vier Metallpfosten. Die regulierbaren Pressluftventile der anliegenden Körper dienen einer geeigneten Steuerung der Kolbenarbeit nach den gewünschten Bedingungen. Die Figur 13 stellt eine Gesamtübersicht des Gezeitenwasserkraftwerkes dar, falls die Pressluft des Zentralbehalters dem Funktionieren einer parallelen Luftturbine für die Hebeperioden dient. Mit besonderen Massnahmen jedoch könnte man eine einzige Turbine anwenden, welche schaltweise mit Meereswasser und mit Luft funktionieren sein.

1

2

3

4

6

5

$H_2O$

7

8

9

10

11

12

13

**Europäisches Patentamt**

**ERKLÄRUNG,**
die nach Regel 45 des Europäischen Patentübereinkommens für das weitere Verfahren als
europäischer Recherchenbericht gilt

EP 86 81 0276

| Nach Auffassung der Recherchenabteilung entspricht die vorliegende europäische Patentanmeldung den Vorschriften des Europäischen Patentübereinkommens so wenig, daß es nicht möglich ist, auf der Grundlage aller Patentansprüche sinnvolle Ermittlungen über den Stand der Technik durchzuführen. | KLASSIFIKATION DER ANMELDUNG (int. Cl.4) |
|---|---|
| Grund: Undeutliche, zusammenhanglose und unverständliche Beschreibung und Patentansprüche. | F 03 B 13/26 |

| Recherchenort | Abschlußdatum der Recherche | Prüfer |
|---|---|---|
| Den Haag | 19-12-1986 | THIBO |